# EUROPEAN PATENT APPLICATION

(11) **EP 4 701 202 A1**
(43) Date of publication of application: **25.02.2026**
(21) Application number: 24791873.3
(22) Date of filing: 08.04.2024
(51) Int. Cl.: H04N 21/25

(54) **VIDEO PROCESSING METHOD, APPARATUS AND DEVICE, AND STORAGE MEDIUM**

(30) Priority: 20.04.2023 CN 202310431590
(71) Applicant: Beijing Zitiao Network Technology Co., Ltd., Beijing 100190 (CN)
(72) Inventor: CHE, Wanli, Beijing 100028 (CN); WANG, Zuxin, Beijing 100028 (CN); ZHAO, Xi, Beijing 100028 (CN); XU, Ye, Beijing 100028 (CN); ZHAO, Muyu, Beijing 100028 (CN)
(74) Representative: Grünecker Patent- und Rechtsanwälte PartG mbB
(86) International application number: PCT/CN2024/086560
(87) International publication number: WO 2024/217288

(57) **Abstract**

The disclosure provides a method, apparatus, device and storage medium for video processing. The method includes: playing a first video on a related recommendation page, and displaying a list of related recommendation videos corresponding to the first video, wherein the first video belongs to a first video flow, or is a related recommendation video directly or indirectly determined based on a video in the first video flow. Upon receiving a close operation for the list of the related recommendation videos on the related recommendation page, the first video is played on a video playback page based on the first video flow. It can be seen that in embodiments of the disclosure, when an operation triggered on the related recommendation page to close the list of the related recommendation videos is received, a related recommendation video scene is exited based on a user's intention, and a video flow playback scene prior to a related recommendation video scene is entered again, thereby ensuring the user's video playback experience and enriching the video-based interactive functions.

## Description

This application claims priority to Chinese patent application No. 202310431590.2, filed on April 20, 2023 and entitled "METHOD, APPARATUS, DEVICE AND STORAGE MEDIUM FOR VIDEO PROCESSING", the entire content of which is incorporated herein by reference.

### FIELD

The present disclosure relates to the field of data processing, and in particular to a method, apparatus, device and storage medium for video processing.

### BACKGROUND

With the continuous advancement of video processing technologies, people's demands for video-related functions are becoming more and more diversified. Therefore, how to enrich video-related functions to meet more user needs and thus improve user experience is a technical problem that urgently requires a solution at present.

### SUMMARY

The present disclosure provides a method, apparatus, device and storage medium for video processing, which can enrich video-based interactive functions and enhance user experience.

In a first aspect, the present disclosure provides a method for video processing. The method includes:
playing a first video on a related recommendation page, and displaying a list of related recommendation videos corresponding to the first video, wherein the first video belongs to a first video flow, or is a related recommendation video directly or indirectly determined based on a video in the first video flow, and the list of the related recommendation videos includes at least one related recommendation video corresponding to the first video; and
in response to a close operation for the list of the related recommendation videos on the related recommendation page, playing the first video on a video playback page based on the first video flow.

In an optional implementation, the first video is a related recommendation video directly or indirectly determined based on a video in the first video flow, and before playing the first video on the related recommendation page, the method further includes:
in response to a preset trigger operation on a video playback page of a second video, jumping from the video playback page to the related recommendation page, wherein the second video belongs to the first video flow;
correspondingly, after in response to the close operation for the list of the related recommendation videos on the related recommendation page, playing the first video on the video playback page based on the first video flow, the method further includes:
   in response to a first preset sliding operation on the video playback page, switching from the first video to play the second video.

In an optional implementation, after in response to the close operation on the list of the related recommendation videos on the related recommendation page, playing the first video on the video play page based on the first video flow, the method further includes:
in response to a second preset sliding operation on the video playback page, switching from the first video to play a third video, wherein the third video belongs to the first video flow.

In an optional implementation, the first video flow belongs to a recommended video flow.

In an optional implementation, playing the first video on the related recommendation page includes: playing the first video in a preset playback window on the related recommendation page; correspondingly, in response to the close operation for the list of the related recommendation videos on the related recommendation page, playing the first video on the video playback page based on the first video flow includes:
in response to the close operation for the list of the related recommendation videos on the related recommendation page, zooming in the preset playback window to display the video playback page, and playing the first video on the video playback page based on the first video flow.

In an optional implementation, after playing the first video in the preset playback window on the related recommendation page, the method further includes:
in response to a trigger operation for a full-screen playback control on the preset playback window, playing the first video in full screen on the related recommendation page based on a related recommendation video flow corresponding to the first video, wherein the related recommendation video flow is composed of related recommendation videos in the list of the related recommendation videos corresponding to the first video.

In an optional implementation, in response to the preset trigger operation on the video playback page of the second video, jumping from the video playback page to the related recommendation page includes:
in response to a trigger operation on a preset video theme region on the video playback page of the second video, jumping from the video playback page to the related recommendation page.

In a second aspect, the present disclosure provides an apparatus for video processing. The apparatus including:
a first playback module configured to play a first video on a related recommendation page, and display a list of related recommendation videos corresponding to the first video, wherein the first video belongs to a first video flow, or is a related recommendation video directly or indirectly determined based on a video in the first video flow, and the list of the related recommendation videos includes at least one related recommendation video corresponding to the first video; and
a second playback module configured to, in response to a close operation for the list of the related recommendation videos on the related recommendation page, play the first video on a video playback page based on the first video flow.

In a third aspect, the present disclosure provides a computer-readable storage medium storing instructions therein, the instructions, when running on a terminal device, causing the terminal device to implement the above method.

In a fourth aspect, the present disclosure provides a device for video processing, including: a memory, a processor, and a computer program stored in the memory and runnable on the processor, when the processor executes the computer program, implementing the above method.

In a fifth aspect, the present disclosure provides a computer program product, the computer program product includes a computer program/instructions, and when the computer program/instructions are executed by a processor, the processor implements the above method.

### BRIEF DESCRIPTION OF THE DRAWINGS

The accompanying drawings here, which are incorporated in the Description and constitute a part of the Description, show embodiments conforming to the present disclosure, and are used to explain the principles of the present disclosure together with the Description.

To describe the technical solutions in embodiments of the present disclosure or in the prior art more clearly, the following briefly introduces the accompanying drawings required for describing embodiments or the prior art. Apparently, a person of ordinary skill in the art may still derive other accompanying drawings from these accompanying drawings without creative efforts.
FIG. 1 is a flow chart of a method for video processing according to an embodiment of the present disclosure;
FIG. 2 is a schematic diagram of a video playback page according to an embodiment of the present disclosure;
FIG. 3 is a schematic diagram of a related recommendation page according to an embodiment of the present disclosure;
FIG. 4 is a schematic structural diagram of an apparatus for video processing according to an embodiment of the present disclosure; and
FIG. 5 is a schematic structural diagram of a device for video processing according to an embodiment of the present disclosure.

### DETAILED DESCRIPTION

In order to understand the above objects, features and advantages of the present disclosure more clearly, the solutions of the present disclosure will be further described below. It should be noted that embodiments of the present disclosure and the features in embodiments may be combined with each other in the absence of conflict.

Many specific details are set forth in the following description to fully understand the present disclosure, but the present disclosure may also be implemented in other ways different from those described herein. Obviously, embodiments in the Description are only part of embodiments of the present disclosure, not all of the embodiments.

With the continuous advancement of video processing technologies, people's demands for video-related functions are becoming more and more diversified. Therefore, how to enrich video-related functions to meet more user needs and thus improve user experience is a technical problem that urgently requires a solution at present.

To this end, embodiments of the present disclosure provide a method for video processing. Specifically, a first video is played on a related recommendation page, and a list of related recommendation videos corresponding to the first video is displayed. The first video belongs to a first video flow, or is a related recommendation video directly or indirectly determined based on a video in the first video flow. Upon receiving a close operation for the list of the related recommendation videos on the related recommendation page, the first video is played on a video playback page based on the first video flow. It can be seen that in embodiments of the present disclosure, when an operation which is triggered on the related recommendation page to close the list of the related recommendation videos is received, a related recommendation video scene is exited based on a user's intention to again enter a video flow playback scene prior to the related recommendation video scene, thereby ensuring the user's video playback experience and enriching the video-based interactive functions.

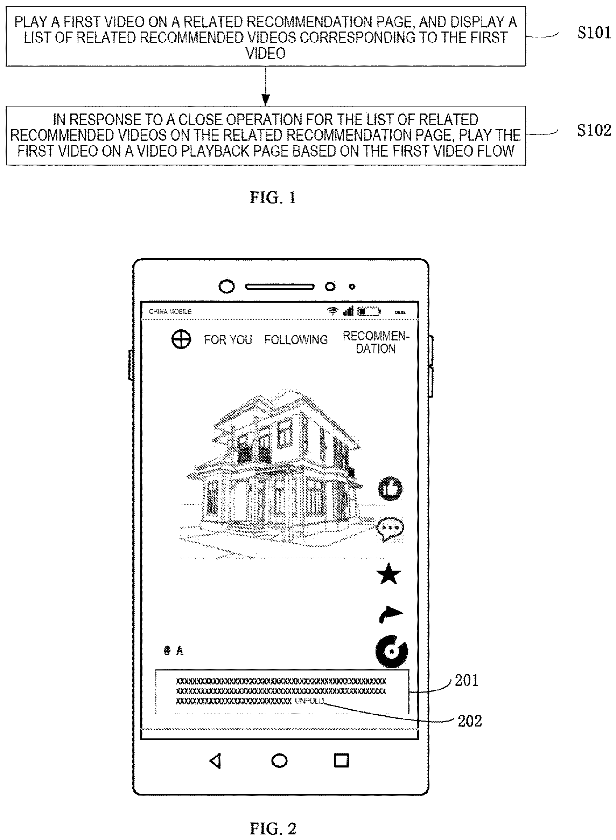

Based on this, embodiments of the present disclosure provide a method for video processing. Referring to FIG. 1, which is a flow chart of a method for video processing according to an embodiment of the present disclosure, the method includes the following steps.

At S101, a first video is played on a related recommendation page, and a list of related recommendation videos corresponding to the first video is displayed.

Herein, the first video belongs to a first video flow, or is a related recommendation video directly or indirectly determined based on a video in the first video flow, and the list of the related recommendation videos includes at least one related recommendation video corresponding to the first video.

The method for video processing according to embodiments of the present disclosure may be applied to a client. For example, the client may include a client installed on a smart phone, a client installed on a tablet computer, etc.

In an optional implementation, the first video played on the related recommendation page may belong to the first video flow, wherein the first video flow may be a recommended video flow. Specifically, before entering the related recommendation page, the first video in the first video flow is played on a video playback page. Upon receiving a preset trigger operation on the video playback page of the first video, the video playback page of the first video may be jumped to the related recommendation page, and the first video may be continuously played on the related recommendation page, and the list of the related recommendation videos corresponding to the first video may be displayed.

In another optional implementation, the first video played on the related recommendation page may be a related recommendation video directly or indirectly determined based on a video in the first video flow. The related recommendation video directly determined based on the video in the first video flow refers to a related recommendation video selected from a list of related recommendation videos corresponding to the video. The related recommendation video indirectly determined based on the video in the first video flow refers to a related recommendation video selected from a subsequent list of related recommendation videos once or multiple times after a related recommendation video is selected from a list of related recommendation videos corresponding to the video.

Specifically, before entering the recommendation page, any video (such as a second video) in the first video flow is played on the video playback page. If the video playback page is triggered to jump to the related recommendation page, the video (such as the second video) currently playing on the video playback page before the jump will be continuously played on the related recommendation page, and a list of related recommendation videos corresponding to the video will be displayed. A user can trigger the switching of the video currently playing on the related recommendation page, that is, switching the second video, by selecting any related recommendation video in the list of the related recommendation videos. When the video is switched, simultaneously, the list of the related recommendation videos displayed on the related recommendation page will be switched in conjunction with the currently playing video.

In an optional implementation, it is assumed that the second video in the first video flow is being played on the video playback page, as shown in FIG. 2, which is a schematic diagram of a video playback page according to an embodiment of the present disclosure. Specifically, in accordance with a received trigger operation acting on a preset video theme region 201 on the video playback page, the video playback page jumps to the related recommendation page, and the second video is continuously played on the related recommendation page, and the list of the relevant recommended videos corresponding to the second video is displayed. The trigger operation acting on the preset video theme region on the video playback page may include a click operation acting on the preset video theme region, etc. In addition, a "Unfold" control 202 may also be displayed in the preset video theme region, and the trigger operation acting on the preset video theme region on the video playback page may also include a click operation acting on the "Unfold" control, etc. In actual applications, in accordance with a received click operation for the "Unfold" control 202, not only can the video playback page jump to the related recommendation page, but also the theme content of the second video can be fully displayed on the related recommendation page. In addition, the related recommendation page may also display video publishing information such as a publishing user of the second video.

If a selecting operation for the first video in the list of the related recommendation videos on the related recommendation page is received, the playing of the first video is switched from the second video on the related recommendation page, and the list of the related recommendation videos corresponding to the first video is updated to be displayed.

In embodiments of the present disclosure, the list of the related recommendation videos includes at least one related recommendation video corresponding to the first video currently being played on the related recommendation page. The related recommendation video corresponding to the first video refers to a recommended video determined based on the video feature information (such as content tags, etc.) of the first video. For example, in accordance with a "cute pet" content tag on the first video, the related recommendation video corresponding to the first video may be a recommended video determined based on the "cute pet" content tag.

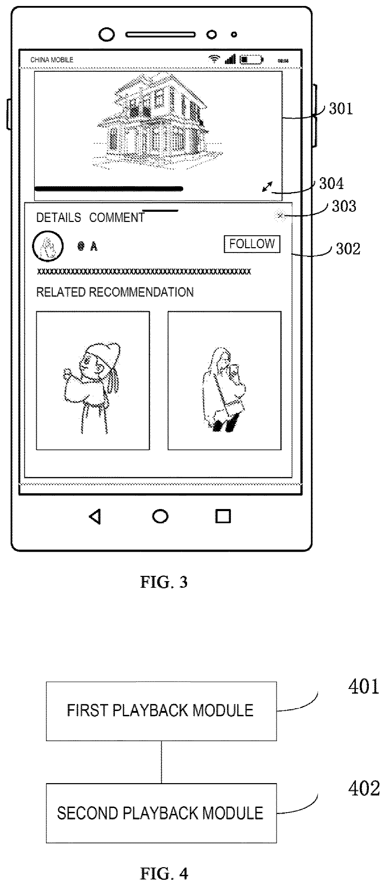

In an optional implementation, the first video is played in a preset playback window on the related recommendation page. As shown in FIG. 3, a schematic diagram of a related recommendation page according to an embodiment of the present disclosure is shown. The first video is played in a preset playback window 301 on the related recommendation page, and the list of the related recommendation videos corresponding to the first video is displayed in a bottom panel 302 on the related recommendation page.

At S102, in response to a close operation for the list of the related recommendation videos on the related recommendation page, the first video is played based on the first video flow on a video playback page.

In embodiments of the present disclosure, during the display of the related recommendation page, if a close operation for the list of the related recommendation videos on the related recommendation page is received, it means that the current user wants to exit the related recommendation scene. To this end, in embodiments of the present disclosure, the related recommendation scene is exited based on the user's operational intention to close the list of the related recommendation videos, jumping to the video playback page is performed, and the video is continuously played based on the video playback scene (such as the recommended video scene) before switching into the related recommendation scene. The related recommendation scene refers to a scene in which at least one related recommendation video is determined based on the content tags of the video being played on the related recommendation page, and the video is played based on the at least one related recommendation video. The recommended video scene refers to a scene in which a recommended video flow is determined based on the current user's video browsing preferences, current hot content, etc., for the current user to play the video.

In an optional implementation, as shown in FIG. 3 above, it is assumed that the first video is played in the preset playback window on the related recommendation page, and the list of the related recommendation videos is displayed on the bottom panel 302 of the related recommendation page. When a close operation acting on the bottom panel 302 on the related recommendation page is received, the preset playback window 301 on the related recommendation page is displayed on the video playback page in a zooming-in manner, and the first video is played on a video playback page based on the first video flow, thereby exiting the related recommendation scene to enter the recommended video scene.

In an optional implementation, the close operation for the bottom panel 302 on the related recommendation page may include a click operation for a close control 303 on the bottom panel 302, or a downward sliding operation acting on the bottom panel 302, etc.

By way of example, it is assumed that video A is being played on the video playback page for playing the recommended video flow. In accordance with the video playback page jumping to the related recommendation page in this case, video A will continue to be played on the related recommendation page based on the playback progress information, and a list of related recommendation videos corresponding to video A will be displayed. On the related recommendation page, the user can trigger a selecting operation for any related recommendation video in the list of the related recommendation videos. It is assumed that a selecting operation for related recommendation video B is received, the related recommendation page will be triggered to switch from video A to video B for playing, and a list of related recommendation videos corresponding to video B will be updated and displayed on the related recommendation page. In accordance with a received close operation for the list of the related recommendation videos of video B, the related recommendation page will be switched to the video playback page, and video A will continue to be played on the video playback page based on the recommended video flow. In accordance with a sliding switch operation on video A, the video to be played after the switch is determined based on the recommended video flow.

In an optional implementation, in accordance with the first video played on the related recommendation page being a related recommendation video directly or indirectly determined based on a video in the first video flow, and the first video flow may be a recommended video flow, etc., then in response to a close operation for the list of the related recommendation videos on the related recommendation page, the first video is continuously played on the video playback page based on the first video flow. In accordance with a received first preset sliding operation triggered on the video playback page is received, assuming a slide downward operation, etc., the first video may be switched to the second video for playing. The second video is the last video played on the video playback page before jumping to the related recommendation page. In order to retain the user's playing progress of the first video flow, the second video may be continuously played after switching back to the video playback page from the related recommendation page.

In addition, when jumping back to the video playback page from the related recommendation page and continuing to play the first video on the video playback page, a prompt message may also be displayed on the video playback page to prompt the user to view the original video through an upward sliding operation, that is, to view the original video played when entering the related recommendation page from the video playback page.

In another optional implementation, in accordance with a received second preset sliding operation on the video playback page, the first video is switched to a third video for playing. The third video belongs to the first video flow, and the second preset sliding operation may be an upward sliding operation, etc.

In actual applications, after switching back to the video playback page from the related recommendation page, the video is continuously played based on the first video flow (such as the recommended video flow), thereby achieving the switching from the related recommendation scene back to the recommended video scene, meeting the user's video playing needs, and avoiding the problem of providing users with related recommendation videos for a long time, resulting in a poor user video playback experience.

In the method for video processing according to embodiments of the present disclosure, a first video is played on a related recommendation page, and a list of related recommendation videos corresponding to the first video is displayed. The first video belongs to a first video flow, or is a related recommendation video directly or indirectly determined based on a video in the first video flow. Upon receiving a close operation for the list of the related recommendation videos on the related recommendation page, the first video is played on the video playback page based on the first video flow. It can be seen that in embodiments of the present disclosure, when an operation which is triggered on the related recommendation page to close the list of the related recommendation videos is received, a related recommendation video scene is exited based on a user's intention to again enter a video flow playback scene prior to the related recommendation video scene, thereby ensuring the user's video playback experience and enriching the video-based interactive functions.

On the basis of the above embodiments, for the implementation scenario of playing the first video using the preset playback window on the related recommendation page, if a trigger operation for a full-screen play control on the preset playback window is received, it means that the current user wants to play the first video in full screen. To this end, in embodiments of the present disclosure, the display of the relevant recommended video list can be hidden, and the first video can be played in full screen on the related recommendation page. As shown in FIG. 3 above, for a full-screen play control 304 provided on the preset playback window 301, when a click operation for the full-screen play control 304 is received, the display of the relevant recommended video list is hidden (i.e., the bottom panel 302 is hidden), and the first video is played in full screen on the related recommendation page.

In an optional implementation, when a preset sliding operation is triggered for the first video played in full screen on the related recommendation page, playback switching can be performed based on a related recommendation video flow corresponding to the first video, that is, triggering an upward or downward sliding operation to trigger switching from the first video to the related recommendation video corresponding to the first video, thereby implementing video playback switching based on the related recommendation video flow of the first video. The related recommendation video flow corresponding to the first video includes related recommendation videos determined based on the content tag of the first video, etc.

It can be seen that in the method for video processing according to embodiments of the present disclosure, not only can the related recommendation video scene be exited to again enter the video flow playback scene prior to the related recommendation video scene by triggering the closing of the list of the related recommendation videos on the related recommendation page; but also the video playback based on the related recommendation video flow can be triggered by triggering the full-screen playback control of the preset playback window on the related recommendation page, thereby meeting the user's video interaction needs and improving the user's video playback experience.

Compared with the prior art, the technical solution according to embodiments of the present disclosure has at least the following advantages:
embodiments of the present disclosure provides a method for video processing, specifically including playing a first video on a related recommendation page, and displaying a list of related recommendation videos corresponding to the first video. The first video belongs to a first video flow, or is a related recommendation video directly or indirectly determined based on a video in the first video flow. Upon receiving a close operation for the list of the related recommendation videos on the related recommendation page, the first video is played on a video playback page based on the first video flow. It can be seen that in embodiments of the present disclosure, when an operation which is triggered on the related recommendation page to close the list of the related recommendation videos is received, a related recommendation video scene is exited based on a user's intention to again enter a video flow playback scene prior to the related recommendation video scene, thereby ensuring the user's video playback experience and enriching the video-based interactive functions.

Based on the above method embodiment, the present disclosure further provides an apparatus for video processing. Referring to FIG. 4, it is a schematic structural diagram of an apparatus for video processing according to an embodiment of the present disclosure, and the apparatus includes the following modules:
a first playback module 401 configured to play a first video on a related recommendation page, and display a list of related recommendation videos corresponding to the first video, wherein the first video belongs to a first video flow, or is a related recommendation video directly or indirectly determined based on a video in the first video flow, and the list of the related recommendation videos includes at least one related recommendation video corresponding to the first video; and
a second playback module 402 configured to, in response to a close operation for the list of the related recommendation videos on the related recommendation page, play the first video based on the first video flow on a video playback page.

In an optional implementation, the first video is a related recommendation video directly or indirectly determined based on a video in the first video flow, and before playing the first video on the related recommendation page, the following is further included:
in response to a preset trigger operation on a video playback page of a second video, jumping from the video playback page to the related recommendation page, wherein the second video belongs to the first video flow; and
correspondingly, after in response to the close operation for the list of the related recommendation videos on the related recommendation page, playing the first video on the video playback page based on the first video flow, the following is further included:
   in response to a first preset sliding operation on the video playback page, switching from the first video to play the second video.

In an optional implementation, after in response to the close operation on the list of the related recommendation videos on the related recommendation page, playing the first video on the video playback page based on the first video flow, the following is further included:
in response to a second preset sliding operation on the video playback page, switching from the first video to play a third video, wherein the third video belongs to the first video flow.

In an optional implementation, the first video flow belongs to a recommended video flow.

In an optional implementation, playing the first video on the related recommendation page includes: playing the first video in a preset playback window on the related recommendation page; and correspondingly, in response to the close operation on the list of the related recommendation videos on the related recommendation page, playing the first video on the video playback page based on the first video flow includes:
in response to the close operation on the list of the related recommendation videos on the related recommendation page, zooming in the preset playback window to display the video playback page, and playing the first video on the video playback page based on the first video flow.

In an optional implementation, after playing the first video in the preset playback window on the related recommendation page, the following is further included:
in response to a trigger operation for a full-screen playback control on the preset playback window, playing the first video in full screen on the related recommendation page based on a related recommendation video flow corresponding to the first video, wherein the related recommendation video flow is composed of related recommendation videos in the list of the related recommendation videos corresponding to the first video.

In an optional implementation, in response to the preset trigger operation on the video playback page of the second video, jumping from the video playback page to the related recommendation page includes:
in response to a trigger operation on a preset video theme region on the video playback page of the second video, jumping from the video playback page to the related recommendation page.

In the method for video processing according to embodiments of the present disclosure, a first video is played on a related recommendation page, and a list of related recommendation videos corresponding to the first video is displayed. The first video belongs to a first video flow, or is a related recommendation video directly or indirectly determined based on a video in the first video flow. Upon receiving a close operation for the list of the related recommendation videos on the related recommendation page, the first video is played on a video playback page based on the first video flow. It can be seen that in embodiments of the present disclosure, when an operation which is triggered on the related recommendation page to close the list of the related recommendation videos is received, a related recommendation video scene is exited based on a user's intention to again enter a video flow playback scene prior to the related recommendation video scene, thereby ensuring the user's video playback experience and enriching the video-based interactive functions.

In addition to the above method and apparatus, embodiments of the present disclosure further provide a computer-readable storage medium storing instructions therein, wherein the instructions, when running on a terminal device, cause the terminal device to implement the method for video processing described in embodiments of the present disclosure.

Embodiments of the present disclosure further provide a computer program product. The computer program product includes a computer program/instructions. When the computer program/instructions are executed by a processor, the processor implements the method for processing the videos described in embodiments of the present disclosure.

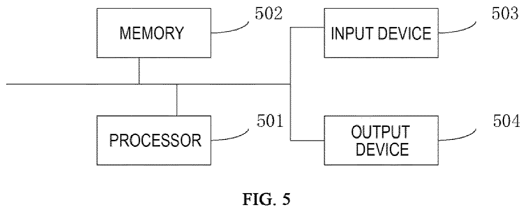

In addition, embodiments of the present disclosure further provide a device for video processing, as shown in FIG. 5, which may include:
a processor 501, a memory 502, an input device 503 and an output device 504. The number of processors 501 in the device for video processing may be one or more, and one processor is taken as an example in FIG. 5. In some embodiments of the present disclosure, the processor 501, the memory 502, the input device 503 and the output device 504 may be connected via a bus or other ways, wherein FIG. 5 takes the connection via a bus as an example.

The memory 502 may be configured to store software programs and modules. The processor 501 executes various functional applications and data processing of the device for video processing by running the software programs and modules stored in the memory 502. The memory 502 may mainly include a program storage region and a data storage region, wherein the program storage region may store an operating system, applications required by at least one function, etc. In addition, the memory 502 may include a high-speed random access memory, and may further include a non-volatile memory, such as at least one disk storage device, a flash memory device, or other volatile solid-state storage devices. The input device 503 may be configured to receive input digital or character information, and generate signal input related to user settings and function controls for the device for video processing.

Specifically, in the present embodiment, the processor 501 will load the executable files corresponding to the processes of one or more applications into the memory 502 according to the following instructions, and the processor 501 will run the applications stored in the memory 502, thereby realizing various functions of the above device for video processing.

It should be noted that, as used herein, relation terms such as "first" and "second" are used merely to distinguish a subject or an operation from another subject or another operation, and not to require or imply any substantial relation or order between these subjects or operations. Moreover, terms "include", "contain" or any variation thereof are intended to cover nonexclusive containing, such that a process, a method, an item or a device containing a series of elements not only includes these elements, but also includes other elements that are not set forth specifically, or also includes an inherent element of such a process, method, item or device. In the absence of further limitation, an element defined by a phrase "include a" does not mean that other identical elements are excluded from the process, method, item or device including said element.

The above only describes specific implementations of the present disclosure, which enable those skilled in the art to understand or implement the present disclosure. The various modifications to these embodiments will be obvious to those skilled in the art, and the general principles defined herein may be implemented in other embodiments without departing from the spirit or scope of the present disclosure. Therefore, the present disclosure will not be limited to these embodiments described herein, but should be consistent with the widest scope conforming to the principles and novelty features disclosed herein.

## Claims

1. A method for video processing, comprising:
playing a first video on a related recommendation page, and displaying a list of related recommendation videos corresponding to the first video, wherein the first video belongs to a first video flow, or is a related recommendation video directly or indirectly determined based on a video in the first video flow, the list of the related recommendation videos comprising at least one related recommendation video corresponding to the first video;
in response to a close operation for the list of the related recommendation videos on the related recommendation page, playing the first video on a video playback page based on the first video flow.

2. The method according to claim 1, wherein the first video is a related recommendation video directly or indirectly determined based on a video in the first video flow, and before playing the first video on the related recommendation page, the method further comprises:
in response to a preset trigger operation on a video playback page of a second video, jumping from the video playback page to the related recommendation page, wherein the second video belongs to the first video flow;
correspondingly, after in response to the close operation for the list of the related recommendation videos on the related recommendation page, playing the first video on the video playback page based on the first video flow, the method further comprises:
in response to a first preset sliding operation on the video playback page, switching from the first video to play the second video.

3. The method according to claim 2, wherein after in response to the close operation for the list of the related recommendation videos on the related recommendation page, playing the first video on the video play page based on the first video flow, the method further comprises:
in response to a second preset sliding operation on the video playback page, switching from the first video to play a third video, wherein the third video belongs to the first video flow.

4. The method according to claim 1, wherein the first video flow belongs to a recommended video flow.

5. The method according to claim 1, wherein playing the first video on the related recommendation page comprises:
playing the first video in a preset playback window on the related recommendation page;
correspondingly, in response to the close operation for the list of the related recommendation videos on the related recommendation page, playing the first video on the video playback page based on the first video flow comprises:
in response to the close operation for the list of the related recommendation videos on the related recommendation page, zooming in the preset playback window to display the video playback page, and playing the first video on the video playback page based on the first video flow.

6. The method according to claim 5, wherein after playing the first video in the preset playback window on the related recommendation page, the method further comprises:
in response to a trigger operation for a full-screen playback control on the preset playback window, playing the first video in full screen on the related recommendation page based on a related recommendation video flow corresponding to the first video, wherein the related recommendation video flow is composed of related recommendation videos in the list of the related recommendation videos corresponding to the first video.

7. The method according to claim 2, wherein in response to the preset trigger operation on the video playback page of the second video, jumping from the video playback page to the related recommendation page comprises:
in response to a trigger operation on a preset video theme region on the video playback page of the second video, jumping from the video playback page to the related recommendation page.

8. An apparatus for video processing, comprising:
a first playback module configured to play a first video on a related recommendation page, and display a list of related recommendation videos corresponding to the first video, wherein the first video belongs to a first video flow, or is a related recommendation video directly or indirectly determined based on a video in the first video flow, the list of the related recommendation videos comprising at least one related recommendation video corresponding to the first video; and
a second playback module configured to, in response to a close operation for the list of the related recommendation videos on the related recommendation page, play the first video on a video playback page based on the first video flow.

9. A computer-readable storage medium storing instructions therein, the instructions, when running on a terminal device, causing the terminal device to implement the method according to any of claims 1 to 7.

10. A device for video processing, comprising: a memory, a processor, and a computer program stored in the memory and runnable on the processor, when the processing executes the computer program, implementing the method according to any of claims 1 to 7.
